# EUROPEAN PATENT APPLICATION

(11) **EP 1 323 493 A2**
(43) Date of publication of application: **02.07.2003**
(21) Application number: 02028647.2
(22) Date of filing: 20.12.2002
(51) Int. Cl.: B23Q 5/56, B23Q 16/02

(54) **Rotational indexing device of machine tool**

(30) Priority: 27.12.2001 JP 2001397419
(71) Applicant: Mori Seiki Co., Ltd., Yamatokoriyama-shi, Nara-ken 639-1183 (JP)
(72) Inventor: Watanabe, Michio, Yamatokoriyama-shi, Nara-ken, 639-1183 (JP); Okuyama, Yoshinobu, Yamatokoriyama-shi, Nara-ken, 639-1183 (JP); Komatsu, Satoshi, Yamatokoriyama-shi, Nara-ken, 639-1183 (JP)
(74) Representative: Kern, Ralf M., Dipl.-Ing.

(57) **Abstract**

Provided is a machine tool rotational indexing device capable of increasing transmission efficiency by preventing slip in transmitting a turning force of a gear mechanism and coping with high-speed rotational indexing with restrained heat generation. In a machine tool rotational indexing device in which a swivel slide 11 loaded with a workpiece or a tool is rotationally indexably mounted in a specified rotational angle position on a fixed base 8, a large spur gear 30 is provided in an outer peripheral portion of the swivel slide 11, a small spur gear 31 meshed with the large spur gear 30 is provided on an intermediate shaft 32 arranged parallel to a rotational axis A of the swivel slide 11, a driving shaft 35 arranged in a direction perpendicular to the rotational axis A and the intermediate shaft 32 are connected to each other with a hypoid gear 45, and the large and small spur gears 30 and 31 and the hypoid gear 45 are made adjustable in position in a direction in which backlash is reduced.

## Description

### BACKGROUND OF THE INVENTION

The present invention relates to a machine tool rotational indexing device, in which a swivel slide loaded with a workpiece or a tool is rotationally indexably mounted in a specified rotational angle position on a fixed base.

A machine tool is sometimes provided with a rotational indexing device, which indexes and clamps a processing table loaded with a workpiece or a tool in a specified rotational angle position to allow processing to be performed in this state. Conventionally, it has been a general practice to employ a worm gear, a cyclonic decelerator or an epicycle reduction gear as a drive mechanism for rotationally driving a processing table as described above (refer to, for example, Japanese Patent Laid-Open Publication No. HEI 6-71542 and Japanese Patent No. 2845970).

When the worm gear is adopted as the aforementioned drive mechanism, there are the problems that slip easily occurs in transmitting a turning force from the worm gear to a worm wheel and the transmission efficiency is low as well as the problem that the worm gear is not suitable for high-speed rotational indexing since it easily generates heat.

When the aforementioned conventional cyclonic decelerator or epicycle reduction gear is adopted, there are the problems that the structure tends to be complicated and increased in size and an increased cost results when a non-backlash structure is adopted.

### SUMMARY OF THE INVENTION

The present invention has been accomplished in view of the aforementioned conventional circumstances and has the object of providing a machine tool rotational indexing device capable of increasing the transmission efficiency by preventing slip in transmitting a turning force, coping with high-speed rotational indexing with restrained heat generation and eliminating backlash with a simple structure.

In a first aspect of the invention, there is provided a machine tool rotational indexing device in which a swivel slide loaded with a workpiece or a tool is rotationally indexably mounted in a specified rotational angle position on a fixed base, the swivel slide and the driving motor being connected to each other with a power transmission mechanism that includes a gear mechanism, and each gear being made adjustable in position in a direction in which backlash between gears of the gear mechanism is reduced.

In a second aspect of the invention, based on the first aspect, a large spur gear is provided in an outer peripheral portion of the swivel slide, a small spur gear meshed with the large spur gear is provided on an intermediate shaft arranged parallel to a rotational axis of the swivel slide, a driving shaft arranged in a direction perpendicular to the rotational axis and the intermediate shaft are connected to each other with a hypoid gear, and the large spur gear, the small spur gear and the hypoid gear are provided adjustable in position in a direction in which the backlash is reduced.

In a third aspect of the invention, based on the second aspect, the large spur gear is supported on the fixed base, the intermediate shaft and the driving shaft are arranged in a drive casing mounted adjustable with respect to the fixed base in a direction in which the backlash between the large spur gear and the small spur gear is reduced, and the intermediate shaft and the driving shaft are supported by the drive casing while being adjustable in position in a direction in which the backlash in the hypoid gear is reduced.

According to the rotational indexing device of the first aspect of the invention, the gears, which belong to the gear mechanism and are meshed with each other, are made adjustable in the direction in which the backlash is reduced. Therefore, the problems attributed to the backlash can be eliminated with a simple structure at low cost.

According to the second aspect of the invention, the small spur gear provided on the intermediate shaft is meshed with the large spur gear provided on the swivel slide, and the intermediate shaft and the driving shaft are connected to each other with the hypoid gear. The driving shaft is made adjustable in the direction in which the backlash in the hypoid gear is eliminated, and the intermediate shaft is made adjustable in the direction in which the backlash between the small spur gear and the large spur gear is eliminated. Therefore, the backlash can be eliminated with a simple structure, and the transmission efficiency of the turning force can be increased by preventing slip. Furthermore, heat generation in the meshed portions can be restrained, and this can cope with an increase in rotational indexing speed.

According to the third aspect of the invention, the hypoid gear is arranged in the drive casing while being adjustable in the direction in which the backlash between both the gears is reduced, and the drive casing is mounted on the fixed base while being adjustable in the direction in which the backlash between the large and small spur gears is reduced. Therefore, the structure for eliminating the backlash between the large and small spur gears can be provided with a simple structure.

### BRIEF DESCRIPTION OF THE DRAWINGS

Fig. 1 is a plan view of a rotational indexing device of a horizontal machining center according to one embodiment of the present invention;
Fig. 2 is a sectional front elevation of the above rotational indexing device;
Fig. 3 is a right-hand side elevation of the above rotational indexing device;
Fig. 4 is a rear elevation of the above rotational indexing device; and
Fig. 5 is a perspective view of the horizontal machining center.

### DETAILED DESCRIPTION OF THE PREFERRED EMBODIMENT

Hereinbelow, an embodiment of the present invention is described with reference to the accompanying drawings.

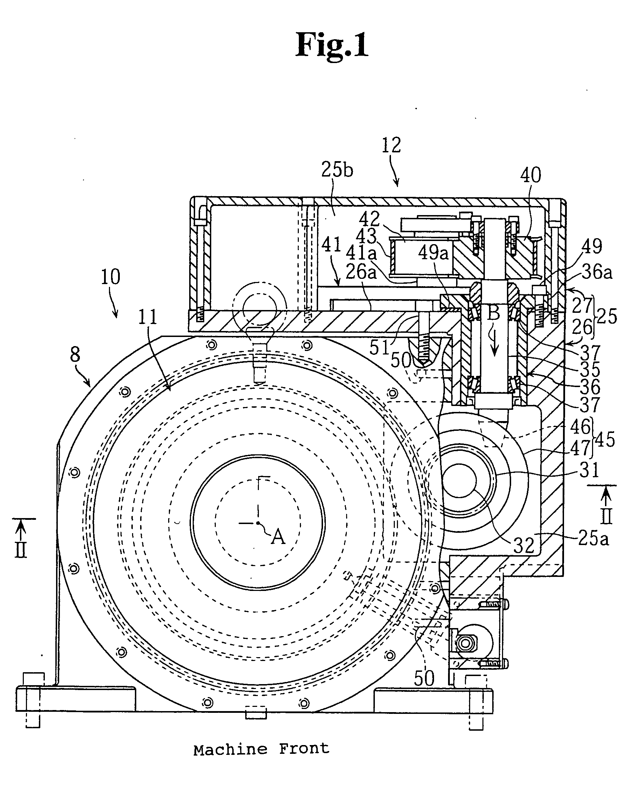

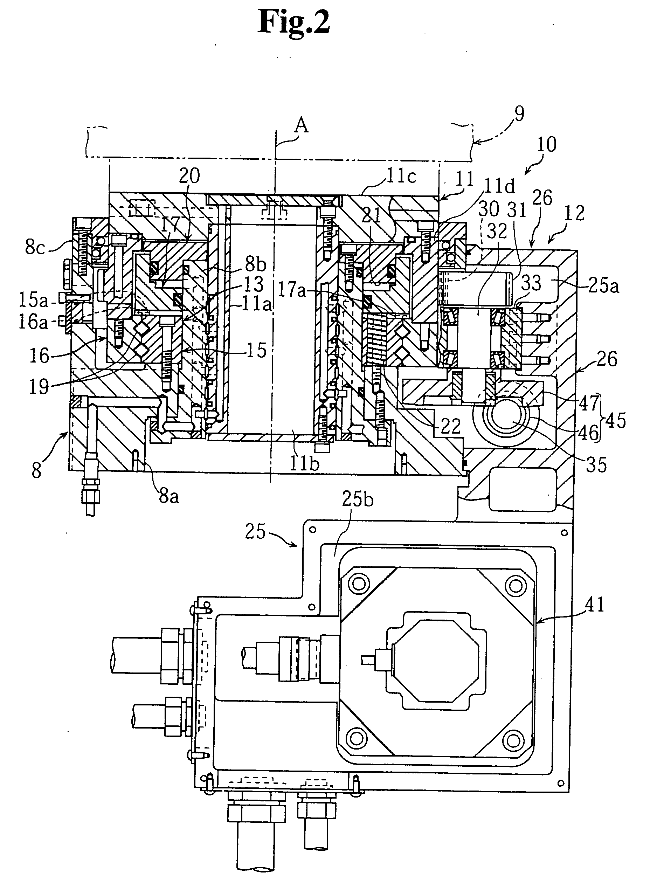

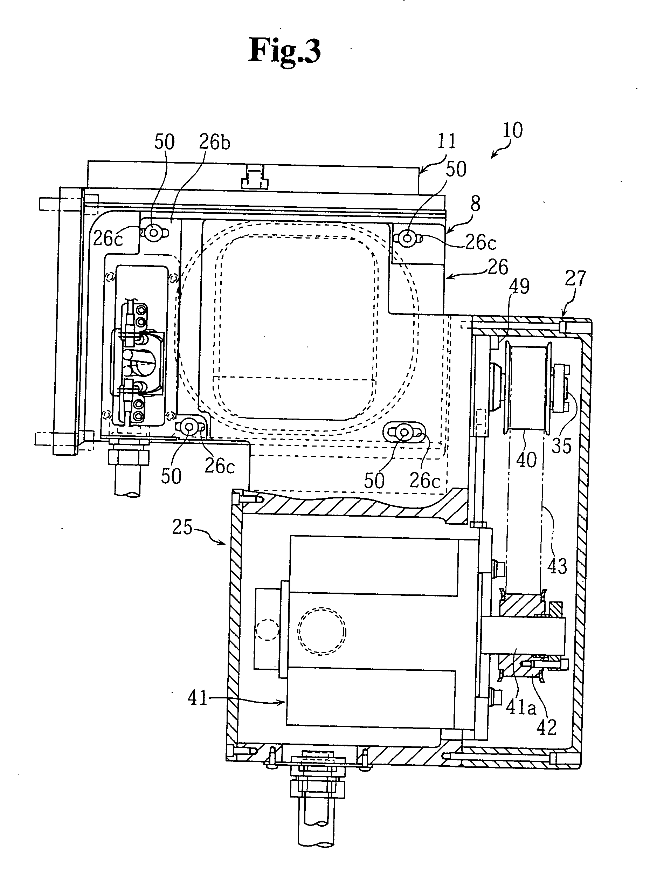

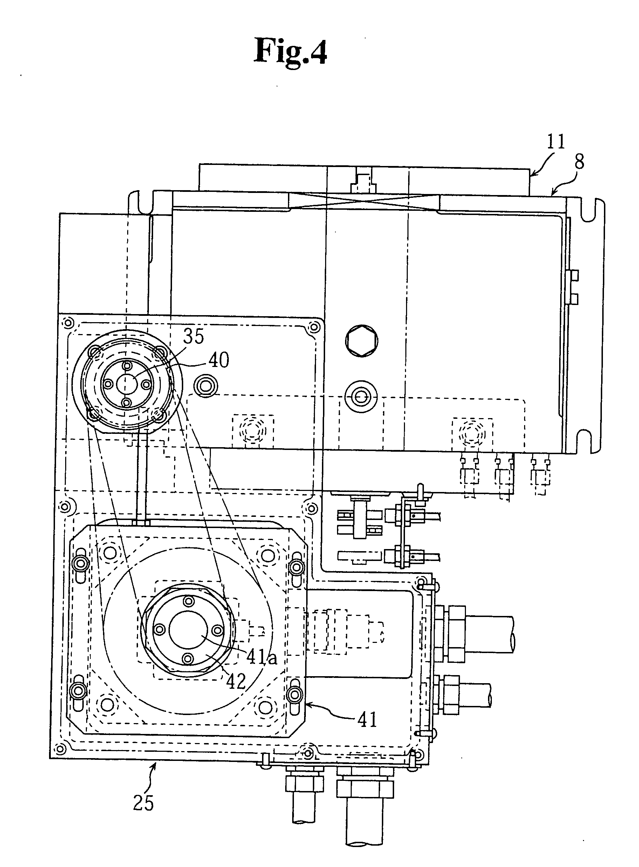

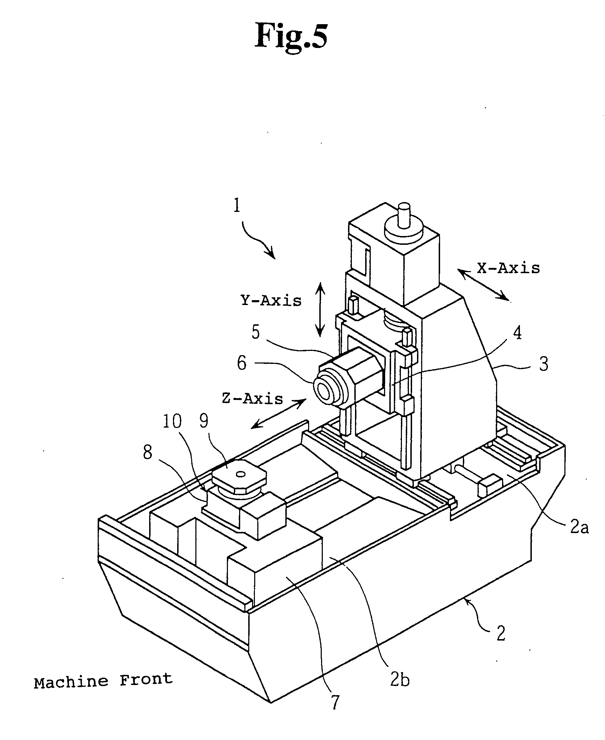

Figs. 1 through 5 are views for explaining the rotational indexing device of a horizontal machining center (machine tool) according to one embodiment of the present invention. Figs. 1, 2, 3 and 4 show a plan view, a sectional front elevation, a right-hand side view and a rear elevation, respectively, of the rotational indexing device. Fig. 5 is a perspective view of the horizontal machining center provided with the rotational indexing device. The terms representing the positions of "front and rear", "left and right" and "upper and lower" in connection with the figures mean the positions viewed from the machine front.

In Fig. 5, the reference numeral 1 denotes a horizontal machining center, in which a column 3 is provided movably in the X-axis direction (horizontal detection) in a hind portion 2a of its fixed bed 2, and a saddle 4 is provided movably in the Y-axis direction (vertical direction) in the column 3. A main shaft head 5 mounted with its axial line horizontally extended is provided movably in the Z-axis direction (depthwise direction) on the saddle 4. Further, a main shaft 6 is rotatably inserted in the main shaft head 5, and the main shaft 6 is loaded with a detachable tool (not shown). By moving the main shaft 6 relatively in the directions of X-axis, Y-axis and Z-axis while rotatively driving this main shaft 6 by means of a main shaft motor (not shown), specified workpiece processing is performed.

An anchor block 7 is arranged and fixed in a fore portion 2b of the bed 2. A fixed base 8 of a rotational indexing device 10 is fixed on this anchor block 7, and a processing table 9 is mounted on the rotational indexing device 10. This processing table 9 is loaded with a workpiece.

As shown in Figs. 1 through 4, the rotational indexing device 10 is provided with a rotational drive mechanism 12 for rotationally driving the swivel slide 11 provided rotatably on the fixed base 8 into a specified rotationally indexed position and a clamping mechanism 13 for clamping the swivel slide 11 in the indexed position, and the processing table 9 is mounted and fixed on the swivel slide 11.

The fixed base 8 is structured roughly by fixing by bolting an inner cylinder section 8b constructed of a cylindrical body in a center portion on a base section 8a fixed on the anchor block 7 and forming a cylindrical outer cylinder section 8c in a peripheral portion coaxially with the inner cylinder section 8b.

Moreover, the swivel slide 11 is structured roughly by rotatably inserting a cylindrical swivel slide section 11a in the inner cylinder section 8b, fixing by bolting a table mounting section 11c on the upper end surface of the swivel slide section 11a and fixing by bolting an outer ring section 11d that comes in sliding contact with the inner peripheral surface of the outer cylinder section 8c on the lower surface of the peripheral portion of the table mounting section 11c.

The clamping mechanism 13 is provided with a stationary-side coupling 15, which is annular when viewed in plan, arranged outside the inner cylinder section 8b and fixed by bolting on the upper surface of the base section 8a, a rotary-side coupling 16, which is annular when viewed in plan, arranged coaxially outside the stationary-side coupling 15 and is fixed by bolting on the lower surface of the outer ring section 11d and a joint coupling 17, which is annular when viewed in plan and arranged above both the couplings 15 and 16 oppositely to the couplings.

The joint coupling 17 is supported slidably in the direction of rotational axis A on the fixed base 8. Moreover, numbers of columnar rollers 19 and 19 are arranged vertically in two rows between the outer peripheral surface of the stationary-side coupling 15 and the inner peripheral surface of the rotary-side coupling 16. With this arrangement, the rotary-side coupling 16 and also the swivel slide 11 can rotate around the rotational axis A.

Meshing teeth 15a and 16a are formed with a prescribed angular pitch provided in the circumferential direction on the upper surface of the stationary-side and rotary-side couplings 15 and 16. Moreover, coupling teeth 17a are formed with a prescribed angular pitch in the circumferential direction so as to meshably oppose to both the meshing teeth 15a and 16a on the lower surface of the joint coupling 17. This joint coupling 17 is elevatable between a clamped position where it is in meshing engagement with the stationary-side and rotary-side couplings 15 and 16 and an unclamped position where the meshing engagement is released.

A cylinder member 20, which is annular when viewed in plan, is arranged on the upper side of the joint coupling 17, and the cylinder member 20 is fixed by bolting on the upper end of the inner cylinder section 8b of the fixed base 8. A space, which is surrounded by the cylinder member 20, the inner cylinder section 8b and the joint coupling 17, serves as a hydraulic chamber 21.

Then, the joint coupling 17 moves down when the hydraulic chamber 21 is supplied with a hydraulic pressure, and its coupling teeth 17a come in meshing engagement with the meshing teeth 15a and 16a of the stationary-side and rotary-side couplings 15 and 16. The rotary-side coupling 16 is fixed to the stationary-side coupling 15 by this meshing engagement, and the processing table 9 is clamped in the rotational angle position specified by the pitches of the meshing teeth 15a and 16a.

Moreover, a spring 22 for urging with a pressure the joint coupling 17 in the unclamping direction of the joint coupling 17 is provided between the stationary-side coupling 15 and the joint coupling 17. If the hydraulic pressure to the hydraulic chamber 21 is released, then the joint coupling 17 is moved up by the spring force of the spring 22, and the clamping is released to allow the swivel slide 11 to rotate.

The rotational drive mechanism 12 is housed in a drive casing 25, which is mounted and fixed on the right-hand side wall of the fixed base 8, and is structured in detail as follows.

The drive casing 25 is structured so that a lid member 27 is fixed by bolting on the back surface side of the casing body 26 on which a mounting boss portion 26b is fixed by bolting with a fixing bolt 50 on the right-hand side wall of the fixed base 8 and includes a gear chamber 25a extended in the depthwise direction and a motor chamber 25b formed in a hind portion of the gear chamber 25a.

The large spur gear 30, which has a pitch corresponding to the indexing pitch, is formed integrally with the outer peripheral surface of the outer ring section 11d of the swivel slide 11. The small spur gear 31 provided in the gear chamber 25a is meshed with this large spur gear 30. The intermediate shaft 32, on which this small spur gear 31 is formed, is provided parallel to the rotational axis A. This intermediate shaft 32 is axially supported by a bearing member 33, and the bearing member 33 is fixed by bolting on the casing body 26.

A driving shaft 35 extended in a direction perpendicular to the rotational axis A is provided below the intermediate shaft 32 in the gear chamber 25a of the drive casing 25. This driving shaft 35 is rotatably inserted and supported via bearings 37 and 37 in the cylindrical support member 36, and the support member 36 is fixed by bolting on the casing body 26.

A driven pulley 40 provided in the motor chamber 25b is mounted and fixed on the hind end portion of the driving shaft 35. A driving motor 41 is housed below the driven pulley 40 in the motor chamber 25b, and a driving pulley 42 is mounted and fixed on an output shaft 41a of the driving motor 41. This driving pulley 42 and the driven pulley 40 are connected to each other with a timing belt 43.

The driving shaft 35 and the intermediate shaft 32 are connected to each other with a hypoid gear 45. This hypoid gear 45 is structured so that a driving gear 46 formed integrally with the fore end portion of the driving shaft 35 is meshed with a driven gear 47, which is annular when viewed in plan and is mounted and fixed on the lower end portion of the intermediate shaft 32. This driving shaft 35 is eccentric outwardly to the axial line of the intermediate shaft 32, and both the axial lines are perpendicular to each other.

The rotation of the driving motor 41 is transmitted to the driving shaft 35 via the timing belt 43 and transmitted from the driving shaft 35 to the swivel slide 11 via the hypoid gear 45, the intermediate shaft 32, the small spur gear 31 and the large spur gear 30. The processing table 9 is thus indexed in the specified rotational angle position.

In the case of the present embodiment, with regard to the gear mechanism portions of the mechanism that transmits the power of the driving motor 41 to the swivel slide 11, the positions of the gears can be adjusted so that the backlash between the gears meshed with each other is reduced.

In concrete, the support member 36 can be adjusted in a direction in which the backlash in the hypoid gear 45 is reduced. That is, the support member 36 has its flange 36a portion fixed tightly with a bolt 49 to the casing body 26 in a state in which the driving gear 46 of the hypoid gear 45 is pressed against the driven gear 47 in a direction of arrow B (turning force transmitting direction). In this case, by properly replacing a washer 49a interposed between the flange 36a and a bearing surface 26a of the casing body 26 with one of a varied thickness, the backlash between the driving gear 46 and the driven gear 47 is adjusted approximately to zero.

Moreover, the small spur gear 31 and the large spur gear 30 can be adjusted in a direction in which the backlash between both the gears is reduced. That is, the casing body 26 and also the drive casing 25 are fixed tightly with a fixing bolt 50 on the fixed base 8 in a state in which the small spur gear 31 is pressed against the large spur gear 30 in the direction of arrow B (turning force transmitting direction). In concrete, the fixing bolt 50 is screwed into the fixed base 8 from an elongate hole 26c formed in the mounting boss portion 26b of the casing body 26. By tightening an adjusting bolt 51 screwed into the fixed base 8 from the bearing surface 26a of the casing body 26 in a state in which the fixing bolt 50 loosened and tightening the fixing bolt 50 when the backlash between the small spur gear 31 and the large spur gear 30 becomes approximately zero after the above operation, the backlash is adjusted.

The operation and effects of the present embodiment are described next.

In the clamped state of the processing table 9, the hydraulic chamber 21 is supplied with a hydraulic pressure, and the joint coupling 17 is engaged with both the stationary-side and rotary-side couplings 15 and 16. When indexing the workpiece in a specified angular position from the above-mentioned clamped state, the hydraulic pressure of the hydraulic chamber 21 is released. Then, the joint coupling 17 is moved up by the spring 22 to release the engagement between the stationary-side and rotary-side couplings 15 and 16, entering an unclamped state.

The driving motor 41 rotates in this unclamped state, and this rotation is transmitted to the swivel slide 11 via the driving shaft 35, the hypoid gear 45, the intermediate shaft 32 and the small and large spur gears 31 and 30, indexing the processing table 9 in the specified rotational angle position. If the rotary-side coupling 16 is thus indexed in the specified angular position, then the hydraulic chamber 21 is supplied with a hydraulic pressure, and the joint coupling 17 moves down to fix the rotary-side coupling 16 on the stationary-side coupling 15. The processing table 9 is thus fixed, and the workpiece is processed in this state.

According to the rotational indexing device 10 of the present embodiment, the small spur gear 31 formed on the intermediate shaft 32 is meshed with the large spur gear 30 formed integrally with the outer ring section 11d of the swivel slide 11, and the intermediate shaft 32 and the driving shaft 35 are connected to each other with the hypoid gear 45. In addition, the hypoid gear 45 is made adjustable in the direction in which the backlash is removed, and the small spur gear 31 and the large spur gear 30 are made adjustable in the direction in which the backlash is removed. This arrangement therefore allows the rotation transmission efficiency to be increased by preventing the slip in transmitting the turning force, allows the heat generation to be restrained at the meshed portions and is consequently enabled to cope with an increase in rotational indexing speed.

In the present embodiment, the support member 36 is mounted on the casing body 26 while being pressurized in a direction in which the driving gear 46 of the hypoid gear 45 and the driven gear 47 are meshed with each other, and this casing body 26 is mounted on the fixed base 8 while being pressurized in a direction in which the small and large spur gears 31 and 30 are meshed with each other. This arrangement is able to remove the backlash in the hypoid gear 45 and the backlash between the small spur gear 31 and the large spur gear 30 with a simple structure at low cost.

In the aforementioned embodiment, the gear mechanism is constructed of the large and small spur gears and the hypoid gear according to the aforementioned description. However, the present invention is not limited to the above-mentioned combination, and a combination of other gears is also acceptable. What is essential is that the gears meshed with each other are required to be provided adjustable in position so that the backlash is reduced.

Although the aforementioned embodiment has been described taking the case where the rotational indexing device is assembled into a horizontal machining center as an example, the present invention includes a singly adopted rotational indexing device.

## Claims

1. A machine tool rotational indexing device in which a swivel slide loaded with a workpiece or a tool is rotationally indexably mounted in a specified rotational angle position on a fixed base, the swivel slide and the driving motor being connected to each other with a power transmission mechanism that includes a gear mechanism, and each gear being made adjustable in position in a direction in which backlash between gears of the gear mechanism is reduced.

2. The machine tool rotational indexing device as claimed in claim 1, wherein a large spur gear is provided in an outer peripheral portion of the swivel slide, a small spur gear meshed with the large spur gear is provided on an intermediate shaft arranged parallel to a rotational axis of the swivel slide, a driving shaft arranged in a direction perpendicular to the rotational axis and the intermediate shaft are connected to each other with a hypoid gear, and the large spur gear, the small spur gear and the hypoid gear are provided adjustable in position in a direction in which the backlash is reduced.

3. The machine tool rotational indexing device as claimed in claim 2, wherein the large spur gear is supported on the fixed base, the intermediate shaft and the driving shaft are arranged in a drive casing mounted adjustable with respect to the fixed base in a direction in which the backlash between the large spur gear and the small spur gear is reduced, and the intermediate shaft and the driving shaft are supported by the drive casing while being adjustable in position in a direction in which the backlash in the hypoid gear is reduced.
